# EUROPEAN PATENT APPLICATION

(11) **EP 4 265 680 A1**
(43) Date of publication of application: **25.10.2023**
(21) Application number: 22771188.4
(22) Date of filing: 08.03.2022
(51) Int. Cl.: C08L 23/12, B29C 45/00, C08K 3/013, C08K 3/26, C08L 23/10, C08L 23/26, C08L 53/00

(54) **INORGANIC SUBSTANCE POWDER-FILLED RESIN COMPOSITION AND MOLDED PRODUCT**

(30) Priority: 15.03.2021 JP 2021041679
(71) Applicant: TBM Co., Ltd., Tokyo 100-0006 (JP)
(72) Inventor: SATO Erina, Tokyo 100-0006 (JP)
(74) Representative: Papula Oy
(86) International application number: PCT/JP2022/009972
(87) International publication number: WO 2022/196436

(57) **Abstract**

Provided are an inorganic substance powder-filled resin composition that provides excellent mechanical properties, has rich ductility, and allows a molded product having excellent moldability and processability and excellent surface appearance to be produced, and a molded product made of such a resin composition. The inorganic substance powder-filled resin composition includes a thermoplastic resin and inorganic substance powder in a proportion of 50:50 to 10:90 in a mass ratio, in which the thermoplastic resin includes a propylene homopolymer and a propylene block copolymer, and a content of the propylene block copolymer is 10 parts by mass or more and 30 parts by mass or less relative to 100 parts by mass of the propylene homopolymer. Maleic anhydride-modified polypropylene may further be included in an amount of 0.5 parts by mass or more and 3.0 parts by mass or less.

## Description

### Field

The present invention relates to an inorganic substance powder-filled resin composition and a molded product. In detail, the present invention relates to a resin composition that provides a molded product providing excellent mechanical properties and having rich ductility, excellent moldability and processability, and excellent surface appearance despite inorganic substance powder that is highly filled in a thermoplastic resin, and a molded product formed of such a resin composition.

### Background

Conventionally, thermoplastic resins have been widely used as materials for various molded products for industrial and household use, food packaging, and molded packaging for general products, along with paper materials that are derived from forest resources. Currently, however, environmental protection has become an international issue, and thus reducing the consumption amount of thermoplastic resins and paper materials has been extensively studied, in parallel with making the thermoplastic resins and paper materials non-toxic, recyclable, and incinerable. From such viewpoints, inorganic substance powder-blended thermoplastic resin compositions prepared by highly filling inorganic substance powders such as calcium carbonate in thermoplastic resins have been developed and put into practical use (refer to, for example, Patent Literature 1).

The resin compositions highly filled with inorganic substance powders, however, generally tend to have significantly low ductility and have brittleness as compared with common thermoplastic resins to which inorganic substance powders are not filled. Therefore, such molded products made of highly filled resin compositions have problems, for example, in that mechanical properties such as elongation and tensile strength during tensile deformation are insufficient and thus the molded products break during use. The resin compositions highly filled with the inorganic substance powders also have problems in that molding and processing are difficult, production efficiency particularly in injection molding is low, and appearance defects such as striped flow marks (tiger stripes) are likely to be generated in the molded products. Such problems are likely to occur when recycled products, particularly recovered products that are used as substitutes for paper materials and include inks or the like are used.

As a method for improving the mechanical properties and moldability of the resin compositions, the technology of blending modified polymers and elastomer components has been known. For example, Patent Literature 2 and Patent Literature 3 have disclosed a resin composition including a modified polyolefin, an ethylene vinyl acetate copolymer, and the like together with a thermoplastic resin such as polypropylene and a filler. Patent Literature 4 has described a polypropylene resin composition including a polypropylene resin, an elastomer having polar functional groups, and a filler.

### Citation List

### Patent Literature

Patent Literature 1: Japanese Patent Application Laid-open No. 2013-10931
Patent Literature 2: Japanese Patent Application Laid-open No. 2010-106270
Patent Literature 3: Japanese Patent Application Laid-open No. 2019-178265
Patent Literature 4: Japanese Patent Application Laid-open No. 2019-99807

### Summary

### Technical Problem

It is conceivable that the modified polymers and the copolymers blended in the resin compositions generate some sort of chemical bonding with the fillers and strengthen interfaces to improve mechanical properties. Therefore, polymers having polar groups are frequently used as such polymers. Maleic anhydride-modified polypropylene and the like are exemplified in Patent Literature 2 to Patent Literature 4 described above. Blending such polymers containing polar groups into highly filled resin compositions, however, does not always improve mechanical properties and moldability. As described in Examples and Comparative Examples later, blending inappropriate polymers causes the highly filled resin composition to become rather brittle or molding defects such as tiger stripes to occur. The same is true for the elastomer components. When the kinds of the blended elastomer components are not appropriately selected, the mechanical properties of the resin composition are not sufficiently improved.

The present invention has been made in view of the above circumstances. An object of the present invention is to provide an inorganic substance powder-filled resin composition that provides excellent mechanical properties, has rich ductility, and allows a molded product having excellent moldability and processability and excellent surface appearance to be produced, and a molded product made of such a resin composition.

### Solution to Problem

The inventors of the present invention have intensively studied for solving the problems described above and, as a result, have found that, in a highly filled resin composition, a composition in which thermoplastic resin components include a propylene homopolymer and a propylene block copolymer and the content of the propylene block copolymer is 10 parts by mass or more and 30 parts by mass or less relative to 100 parts by mass of the propylene homopolymer allows a thermoplastic resin composition having ductility and excellent mechanical properties to be obtained, and in addition, a resin composition further including maleic anhydride-modified polypropylene allows a molded product having excellent moldability and surface appearance to be obtained. Consequently, the inventors of the present invention have attained the present invention.

Namely, the present invention includes an inorganic substance powder-filled resin composition including:
a thermoplastic resin and inorganic substance powder in a proportion of 50:50 to 10:90 in a mass ratio, in which
the thermoplastic resin includes a propylene homopolymer and a propylene block copolymer, and
a content of the propylene block copolymer is 10 parts by mass or more and 30 parts by mass or less relative to 100 parts by mass of the propylene homopolymer.

In an aspect of the inorganic substance powder-filled resin composition according to the present invention, the inorganic substance powder-filled resin composition in which the thermoplastic resin further includes maleic anhydride-modified polypropylene in an amount of 0.5 parts by mass or more and 3.0 parts by mass or less relative to 100 parts by mass of a total mass of the inorganic substance powder-filled resin composition is described.

In an aspect of the inorganic substance powder-filled resin composition according to the present invention, the inorganic substance powder-filled resin composition in which the maleic anhydride-modified polypropylene has a mass average molecular weight of 25,000 or more and 35,000 or less, and a graft amount of 3.0% by mass or more and 4.9% by mass or less is described.

In one aspect of the inorganic substance powder-filled resin composition according to the present invention, the inorganic substance powder-filled resin composition in which the inorganic substance powder is heavy calcium carbonate is described.

In one aspect of the inorganic substance powder-filled resin composition according to the present invention, the inorganic substance powder-filled resin composition in which the heavy calcium carbonate is heavy calcium carbonate particles having an average particle diameter measured by an air permeation method in accordance with JIS M-8511 of 0.7 um or more and 6.0 µm or less is described.

The present invention for solving the problems described above includes a molded product made of the inorganic substance powder-filled resin composition described above.

In one aspect of the molded product according to the present invention, the molded product is an injection-molded product.

### Advantageous Effects of Invention

According to the present invention, an inorganic substance powder-filled resin composition that provides excellent mechanical properties, has rich ductility and allows a molded product having excellent moldability and processability and excellent surface appearance to be produced, and a molded product made of such a resin composition are provided. The inorganic substance powder-filled resin composition according to the present invention particularly exhibits excellent flexibility and high impact strength, and also has the advantage of not causing tiger stripes or other appearance defects in the molded product.

### Brief Description of Drawings

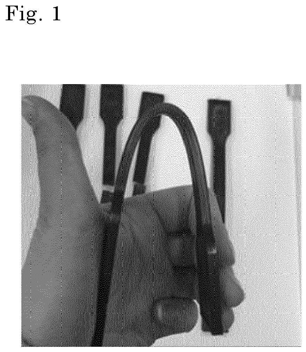

[Fig. 1] Fig. 1 is a photographic view illustrating a flexibility test method in Examples and exemplifying a test case study of an inorganic substance powder-filled resin composition molded product of Example 2 according to the present invention.

### Description of Embodiments

Hereinafter, the present invention will be described in detail with reference to embodiments.

### <<Inorganic substance powder-filled resin composition>>

The inorganic substance powder-filled resin composition according to the present invention includes a thermoplastic resin and inorganic substance powder in a proportion of 50:50 to 10:90 in a mass ratio, in which the thermoplastic resin includes a propylene homopolymer and a propylene block copolymer, and a content of the propylene block copolymer is 10 parts by mass or more and 30 parts by mass or less relative to 100 parts by mass of the propylene homopolymer. Hereinafter, each component constituting the inorganic substance powder-filled resin composition according to the present invention (hereinafter, may be referred to as a "resin composition") will be described in detail.

### <Propylene homopolymer>

The propylene homopolymer (hereinafter, may be referred to as "PP") is a polymer in which substantially propylene alone is polymerized, and has excellent rigidity and heat resistance. Various products are commercially available and examples include WINTEC (registered trademark) and NOVATEC (registered trademark) manufactured by Japan Polypropylene Corporation, NOBLEN (registered trademark) manufactured by Sumitomo Chemical Co., Ltd., Prime Polypro (registered trademark) manufactured by Prime Polymer Co., Ltd., TORAYCA (registered trademark) manufactured by Toray Industries, Inc., SABIC (registered trademark) PP manufactured by SABIC Petrochemicals B. V., and SunAllomer (registered trademark) manufactured by SunAllomer Ltd. The present invention is however not limited to these, and may include any PP. Plural kinds of PP may be used together.

The propylene homopolymer is classified into isotactic PP, syndiotactic PP, atactic PP, hemi-isotactic PP, and the like depending on the difference in stereoregularity. The resin composition according to the present invention may include any of these PP, and plural kinds of these PP may be used together. A homopolymer including trace amounts of components generated as by-products during polymerization or having a branched structure may also be used. The molecular weight of the homopolymer is not particularly limited. In the present invention, however, PP having a mass average molecular weight of about 50,000 or more and about 500,000 or less and particularly about 100,000 or more and 400,000 or less is preferably used. Generally, as the molecular weight becomes higher, the mechanical properties such as strength become better, whereas as the molecular weight becomes lower, the moldability becomes better. PP having a mass average molecular weight of about 50,000 or more and less than about 200,000 and PP having a mass average molecular weight of about 200,000 or more and about 500,000 or less may be used together. Combining PP having different molecular weights also allows the moldability to be improved and the appearance defects in the molded product to be reduced.

### <Propylene block copolymer>

The propylene block copolymer is a copolymer made of a block of continuous propylene monomers and a block of continuous other monomer components. Here, the monomer components copolymerized with propylene are not particularly limited, and block copolymers are not only limited to a binary system but also may be a ternary system, a quaternary system, and the like. The copolymerization ratio of each monomer, the length of each block, or the overall molecular weight are also not particularly limited. However, a block copolymer made of propylene, other α-olefins, and the like is preferable in the present invention. A block copolymer made of propylene and an α-olefin allows the resin composition according to the present invention to exhibit more improved mechanical properties and moldability due to its excellent compatibility with the propylene homopolymer.

The block copolymer of propylene and the α-olefin has been known and various products are commercially available. Examples include, NOVATEC (registered trademark) manufactured by Japan Polypropylene Corporation, Prime Polypro (registered trademark) manufactured by Prime Polymer Co., Ltd., Umex (registered trademark) manufactured by Sanyo Chemical Industries, Ltd., and SunAllomer (registered trademark) manufactured by SunAllomer Ltd. In the present invention, the propylene block copolymer is not limited thereto and any propylene block copolymer may be included. Two or more block copolymers can also be used together. The monomers copolymerized with propylene are not particularly limited. For example, one or more of monomer components selected from ethylene and α-olefins having a carbon number of 4 to 10 may be used. Examples include, but are not limited to, ethylene, 1-butene, isobutylene, 1-pentene, 3-methyl-1-butene, 1-hexene, 3,4-dimethyl-1-butene, 1-heptene, 3-methyl-1-hexene, and 1 octene. Of these α-olefins, copolymers with ethylene, 1-butene, isobutylene, 1-hexene, and/or 1-octene are preferable and the copolymer with ethylene is particularly preferable. The copolymerization ratio and the molecular weight are also not particularly limited. A copolymer having a constituent unit derived from α-olefin serving as the copolymerization monomer of preferably 5% by mass or more, more preferably 7% by mass or more, and particularly preferably 8% by mass or more and a copolymer having the same constituent units of preferably 35% by mass or less, more preferably 25% by mass or less, further preferably 20% by weight or less, and particularly preferably 18% by mass or less may be used. These block copolymers have rich ductility and excellent compatibility with propylene homopolymer, and thus exhibit particularly excellent mechanical properties and moldability when blended into the inorganic substance powder-filled resin composition according to the present invention.

The block copolymer made of propylene and the α-olefin may also contain constituent unit derived from a third component such as a diene and a carboxylic acid (ester) modified olefin. Examples of the diene components include, but are not limited to, 1,4-hexadiene, 1,6-octadiene, 5-methyl-1,4-hexadiene, 3,7-dimethyl-1,6-octadiene, dicyclopentadiene (DCPD), ethylidene norbornene (ENB), norbornadiene, and 5-vinyl-2-norbornene. Examples of the carboxylic acid (ester) modified olefins include, but are not limited to, olefins containing carboxyl groups. The copolymer containing, for example, 0.1% by mass to 10% by mass, particularly 0.5% by mass to 8% by mass, and especially 1% by mass to 5% by mass of the constituent units derived from these third components may exhibit different melting behavior and compatibility from those of the block copolymers not containing the third components. The physical properties and processability of the inorganic substance powder-filled resin composition according to the invention can be controlled by blending these constituent units. The constituent unit derived from the diene may also act as cross-linking sites. Therefore, the block copolymer may be partially cross-linked to modify processability by mixing the diene-containing block copolymer with other components together with the cross-linking agents such as peroxides. The use of the block copolymer containing the functional groups such as carboxylic acid groups may also enhance miscibility with the inorganic substance powder and improve physical properties and moldability.

The properties of the propylene block copolymer as described above have wide variety. For example, the properties include a mass average molecular weight in the range of about 20,000 to about 5,000,000, typically about 50,000 to about 1,000,000, and particularly about 70,000 to about 400,000; a density in the range of about 0.84 g/cm³ to about 0.92 g/cm³ and typically about 0.85 g/cm³ to about 0.91 g/cm³; a degree of crystallinity in the range of about 0.5% to about 40% and typically about 5% to about 25%; a melt flow rate (MFR in accordance with ASTM D1238 at 2.16 kg and 230°C) in the range of about 0.1 g/10 min to about 90 g/10 min and typically about 0.5 g/10 min to about 30 g/10 min; and a melting temperature in the range of about 120°C to about 180°C, typically about 150°C to about 170°C, and particularly about 160°C to about 165°C. These properties, however, are not limited thereto and the propylene-α-olefin copolymers having any properties can be used in the present invention.

In the present invention, however, the propylene block copolymer is preferably a propylene-ethylene block copolymer made of a propylene block and an ethylene-propylene copolymer block. More preferably, a block copolymer having a propylene-derived constituent unit of 80% by mass or more and an ethylene-derived constituent unit of 20% by mass or less; particularly preferably a block copolymer having a propylene-derived constituent unit of 82% by mass to 92% by mass and an ethylene-derived constituent unit of 8% by mass to 18% by mass; and especially preferably a block copolymer having a propylene-derived constituent unit of 84% by mass to 90% by mass and an ethylene-derived constituent unit of 10% by mass to 16% by mass is used. Such a polymer can be produced, for example, by polymerizing propylene alone and subsequently copolymerizing with ethylene. In general, the propylene-ethylene block copolymer exhibits what is called a sea-island structure, in which the phases of the ethylene-propylene copolymer blocks are dispersed in a continuous phase in which propylene is mainly polymerized. The ethylene-propylene copolymer is generally ductile and provide ductility to the inorganic substance powder-filled resin composition. In addition, the continuous phase has almost the same composition as the propylene homopolymer and thus the ethylene-propylene copolymer has excellent compatibility. Therefore, the ethylene-propylene copolymer is not separated in the inorganic substance powder-filled resin composition according to the present invention, and thus excellent mechanical properties and moldability are provided.

The inorganic substance powder-filled resin composition according to the present invention includes this propylene block copolymer in an amount of 10 parts by mass or more and to 30 parts by mass or less, preferably 15 parts by mass or more and 28 parts by mass or less, and more preferably 20 parts by mass or more and 25 parts by mass or less relative to 100 parts by mass of the propylene homopolymer. The propylene block copolymer having the content described above of 10 parts by mass or more allows the inorganic substance powder-filled resin composition according to the present invention to exhibit excellent mechanical properties such as high flexibility and impact strength and particularly excellent tensile properties. The propylene block copolymer having the content described above of 30 parts by mass or less allows excellent rigidity, heat resistance, and moldability to be retained. In order to exhibit these excellent properties, the content of the propylene block copolymer is preferably 1% by mass to 11.5% by mass, further preferably 3% by mass to 11% by mass, and particularly preferably 5% by mass to 10% by mass relative to 100% by mass of the total mass of the inorganic substance powder-filled resin composition according to the present invention.

### <Maleic anhydride-modified polypropylene>

The inorganic substance powder-filled resin composition according to the present invention may further include maleic anhydride-modified polypropylene as the thermoplastic resin component. Including the maleic anhydride-modified polypropylene allows the moldability, particularly injection moldability, of the inorganic substance powder-filled resin composition according to the present invention to be improved, and defects such as tiger stripes in the molded product to be reduced.

The mass average molecular weight of the maleic anhydride-modified polypropylene is not particularly limited and is preferably about 25,000 or more and about 35,000 or less and particularly preferably about 28,000 or more and about 32,000 or less. The maleic anhydride-modified polypropylene having the mass average molecular weight within the above range more reliably allows moldability to be improved and defects such as tiger stripes to be reduced without adversely affecting the physical properties of the resin composition caused by separating from the thermoplastic resin. The amount of grafted maleic anhydride (modification rate) is not particularly limited and, for example, may be grafted up to about 6.0% by mass. From the same reason as for the mass average molecular weight, however, the amount of maleic anhydride grafted in the maleic anhydride-modified polypropylene is preferably 3.0% by mass or more and 4.9% by mass or less and particularly preferably 3.5% by mass or more and 4.8% by mass or less. Maleic anhydride-modified polypropylene having a graft amount of maleic anhydride of more than about 5% by mass may cause deterioration in the physical properties of the resin composition such as flexibility. Such maleic anhydride-modified polypropylene can be obtained, for example, by reacting desired polypropylene with the desired amount of maleic anhydride in the presence of peroxides or the like. Various kinds of commercially available products are supplied and preferable products can be selected for use.

The content of the maleic anhydride-modified polypropylene in the inorganic substance powder-filled resin composition according to the present invention may be 0.5 parts by mass or more and 3.0 parts by mass or less, more preferably 0.7 parts by mass or more and 2.0 parts by mass or less, and particularly preferably 0.8 parts by mass or more and 1.5 parts by mass or less relative to 100 parts by mass of the total mass of the inorganic substance powder-filled resin composition. The inorganic substance powder-filled resin composition having a content of the maleic anhydride-modified polypropylene of 0.5 parts by mass or more allows defects such as tiger stripes to be significantly reduced. The inorganic substance powder-filled resin composition having a content of the maleic anhydride-modified polypropylene of 3.0 parts by mass or less allows the risk of separation from the thermoplastic resin described above to be prevented and excellent mechanical properties to be retained.

In the inorganic substance powder-filled resin composition according to the present invention, the thermoplastic resin includes the propylene homopolymer and the propylene block copolymer as described above and the maleic anhydride-modified polypropylene as optional components if necessary. The inorganic substance powder-filled resin composition may be constituted by including other resin components. Examples include thermoplastic resins such as poly(meth)acrylic acid (ester), polyvinyl acetate, polyacrylonitrile, polystyrene, ABS resins, polycarbonate, polyamide, polyvinyl alcohol, petroleum hydrocarbon resins, and coumarone indene resins; and furthermore elastomers such as styrene-butadiene copolymers, styrene-isoprene copolymers, styrene-butadiene-ethylene copolymers, styrene-isoprene-ethylene copolymers, acrylonitrile-butadiene copolymers, and fluoroelastomers. Blending these resin components may result in more uniform dispersion of each component in the inorganic substance powder-filled resin composition and improvement in physical properties and processability.

In the inorganic substance powder-filled resin composition according to the present invention, however, from the viewpoint of compatibility of various kinds of resin components, preferably 90% by mass or more, more preferably 97% by mass or more, and particularly preferably substantially all of the thermoplastic resin components are made of the propylene homopolymers and the propylene block copolymer described above or made of the propylene homopolymer, the propylene block copolymer, and the maleic anhydride-modified polypropylene described above. The inorganic substance powder-filled resin composition substantially not including resin components other than these may result in little risk of separation of a part of the resin components and thus deterioration in mechanical properties and moldability are prevented. The inorganic substance powder-filled resin compositions according to the present invention includes preferably 9% by mass to 45% by mass, especially preferably 15% by mass to 40% by mass, and particularly preferably 20% by mass to 38% by mass of the propylene homopolymer, preferably 1% by mass to 11.5% by mass and particularly preferably 3% by mass to 11% by mass of the propylene block copolymer, preferably 0% by mass or 0.5% by mass to 3.0% by mass and particularly preferably 0.7% by mass to 2.0% by mass of the maleic anhydride-modified polypropylene, and preferably 90% by mass to 50% by mass and particularly preferably 80% by mass to 52% by mass of the inorganic substance powder described below.

### <Inorganic substance powder>

The inorganic substance powder-filled resin composition according to the present invention includes the inorganic substance powder together with the thermoplastic resin described above. The inorganic substance powder is not particularly limited. Examples thereof include powdery carbonates, sulfates, silicates, phosphates, borates, oxides, or hydrates thereof of calcium, magnesium, aluminum, titanium, iron, zinc, and the like.

Specifically, calcium carbonate, magnesium carbonate, zinc oxide, titanium oxide, silica, alumina, clay such as talc and kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, shirasu, calcium sulfite, sodium sulfate, potassium titanate, bentonite, wollastonite, dolomite, and graphite are exemplified. These inorganic substance powders may be synthetic products or products originated from natural minerals and may be used singly or in combination of two or more of the inorganic substance powders.

In addition, the shape of the inorganic substance powder is not particularly limited and may be in the form of any of particles, flakes, granules, fibers, and the like. The particle shape may be a spherical shape as is generally obtained by synthetic methods, or an irregular shape as is obtained by grinding collected natural minerals.

As these inorganic substance powders, for example, calcium carbonate, magnesium carbonate, zinc oxide, titanium oxide, silica, alumina, clay such as talc and kaolin, aluminum hydroxide, and magnesium hydroxide are preferable. The inorganic substance powder including calcium carbonate is particularly preferable. As calcium carbonate, both of what is called light calcium carbonate prepared by a synthesis method and what is called heavy calcium carbonate obtained by mechanically grinding and classifying natural raw materials including CaCO₃ as the main component such as limestone may be used and the combination thereof may also be used.

In the present invention, however, the inorganic substance powder including heavy calcium carbonate is preferably used. Here, the heavy calcium carbonate is a product obtained by mechanically grinding and processing natural limestone or the like and is clearly distinguished from synthetic calcium carbonate produced by chemical precipitate reaction or the like. The grinding method includes a dry method and a wet method. Heavy calcium carbonate obtained by the dry method is preferable.

The heavy calcium carbonate particles are different from light calcium carbonate produced by, for example, the synthesis method and have characteristics in irregular shape properties of the surface and a large specific surface area due to particle formation performed by the grinding treatment. The heavy calcium carbonate particles have the irregular shape properties and the large specific surface area as described above and thus have more contact interfaces with the thermoplastic resin in the case where the heavy calcium carbonate particles are blended in the thermoplastic resin, which is effective for uniform dispersion.

Although not particularly limited, the specific surface area of the heavy calcium carbonate particles is desirably about 3,000 cm²/g or more and about 35,000 cm²/g or less, depending on the average particle diameter of the heavy calcium carbonate particles. The specific surface area referred herein is in accordance with the air permeation method. The heavy calcium carbonate particles having the specific surface area within this range tend to reduce deterioration in processability of the obtained molded products.

The irregular shape properties of the heavy calcium carbonate particles can be represented by the low degree of spheroidization of the particle shape. Although not particularly limited, specifically, a roundness is desirably 0.50 or more and 0.95 or less, more preferably 0.55 or more and 0.93 or less, and further preferably 0.60 or more and 0.90 or less. The heavy calcium carbonate particles having the roundness within this range allow the strength and moldability of molded products to be appropriate. Here, the roundness can be represented by (Projected area of particle)/(Area of a circle having the same perimeter as the projected perimeter of particle). The method of measuring the roundness is not particularly limited. For example, the projected area of a particle and the projected perimeter of a particle can be measured from a micrograph, or commonly commercially available image analysis software can be used.

In order to improve the dispersibility or reactivity of the inorganic substance powder, the surface may be previously modified in accordance with a common method. Examples of the surface modification method include physical methods such as plasma treatment and a method in which the surface is subjected to chemical surface treatment with a coupling agent or a surfactant. Examples of the coupling agent include a silane coupling agent and a titanium coupling agent. As the surfactant, any of an anionic surfactant, a cationic surfactant, a nonionic surfactant, and an amphoteric surfactant may be used. Examples of the surfactant include higher fatty acids, higher fatty acid esters, higher fatty acid amides, and higher fatty acid salts. Contrary to these modified inorganic substance powders, inorganic substance powders without being subjected to surface treatment may be included.

The inorganic substance powder such as the heavy calcium carbonate particles is not particularly limited. The average particle diameter thereof is preferably 0.5 µm or more and 9.0 µm or less, more preferably 0.7 um or more and 6.0 µm or less, further preferably 1.0 µm or more and 4.0 µm or less, and particularly preferably 1.2 um or more and 3.0 µm or less. The average particle diameter of the inorganic substance powder described in the present description refers to a value calculated from the measurement result of the specific surface area by the air permeation method in accordance with JIS M-8511. As a measurement apparatus, for example, a specific surface area measurement apparatus Type SS-100 manufactured by SHIMADZU CORPORATION may be preferably used. Although depending on the layer thickness of the molded product, the heavy calcium carbonate particles having an average particle diameter of more than 9.0 µm may cause the inorganic substance powder to be protruded from the surface of the molded product and thus the powder to fall off, or the surface properties, mechanical strength, or the like to be impaired, for example, when a sheet-shaped molded product is molded. In particular, in the particle diameter distribution, particles having a particle diameter of 45 um or more are preferably excluded. On the other hand, excessively fine particles cause the viscosity at the time of kneading with the resin described above to significantly increase and thus production of the molded products may be difficult. Such problems can be prevented by setting the average particle diameter of the inorganic substance powder to 0.5 um or more, further 0.7 µm or more and 6.0 µm or less, and particularly 1.0 um or more and 3.0 µm or less.

As described above, calcium carbonate is preferably used as the inorganic substance powder in the present invention. The calcium carbonate may include a first calcium carbonate having an average particle diameter of 0.5 um or more and less than 2.0 µm and particularly 0.7 um or more and less than 2.0 µm as measured by the air permeation method in accordance with JIS M-8511 and a second calcium carbonate having an average particle diameter of 2.0 µm or more and less than 9.0 µm and particularly 2.0 µm or more and less than 6.0 µm as measured by the air permeation method in accordance with JIS M-8511. This allows the surface properties, printability, blocking properties, and other physical properties of the molded product to be improved. In addition, this allows the segregation of the calcium carbonate to be reduced, molded products having excellent appearance and mechanical properties such as elongation at break to be obtained, and calcium carbonate dropout from the resin composition molded product also to be reduced. Although not particularly limited, in the case where the average particle diameter of the first calcium carbonate is defined as a and the average particle diameter of the second calcium carbonate is defined as b, the first calcium carbonate and the second calcium carbonate are desirably roughly classified so that the a/b ratio is preferably about 0.85 or less, more preferably about 0.10 to about 0.70, and further preferably about 0.10 to about 0.50. This is because particularly excellent effects can be expected when such calcium carbonates having obvious difference in average particle diameter to some extent are used together. Each of the first calcium carbonate and the second calcium carbonate desirably has a coefficient of variation (Cv) of the particle diameter (um) distribution of about 0.01 to about 0.10 and particularly desirably about 0.03 to about 0.08. It is conceivable that the variation in particle diameter as defined by the coefficient of variation (Cv) in this range allows each group of powders to more complementarily provide effects. The mass ratio of the first calcium carbonate to the second calcium carbonate is preferably set to about 90:10 to about 98:2 and particularly preferably about 92:8 to about 95:5. Three or more calcium carbonates having different average particle diameter distributions may also be used. Both of the first calcium carbonate and the second calcium carbonate are preferably surface-treated heavy calcium carbonates.

In the inorganic substance powder-filled resin composition according to the present invention, the thermoplastic resin and inorganic substance powder described above are included in a mass ratio of 50:50 to 10:90. This is because a less content of the inorganic substance powder results in difficulty in obtaining physical properties such as texture and strength of the resin composition and an excessive content of the inorganic substance powder results in difficulty in kneading and molding processing and insufficient ductility. The proportion of the inorganic substance powder to the total mass of the thermoplastic resin and the inorganic substance powder is preferably 52% by mass or more and more preferably 55% by mass or more. The upper limit of the proportion is preferably 80% by mass or less, more preferably 75% by mass or less, and particularly preferably 70% by mass or less. Considering that the ductility of the inorganic substance powder-filled resin composition may be significantly influenced by the propylene block copolymer, the mass ratio of the propylene block copolymer to the inorganic substance powder may be specified together with the mass ratio described above. Setting the mass ratio of the propylene block copolymer to the inorganic substance powder in the range of, for example, 3:97 to 25:75, further 5:95 to 20:80, and especially 10:90 to 18:82 allows a resin composition having a particularly excellent balance between ductility and strength to be prepared.

### <Other additives>

Other additives may be blended as auxiliary agents to the inorganic substance powder-filled resin composition according to the present invention, if necessary. As the other additives, for example, colorants, lubricants, coupling agents, flowability improvers (flowability adjusters), cross-linking agents, dispersing agents, antioxidants, ultraviolet ray absorbers, flame retardants, stabilizers, antistatic agents, foaming agents, and plasticizers may be blended. These additives may be used singly or in combination of two or more of the additives. These additives may be blended in a kneading step described later or may be previously blended in the raw material components before the kneading step. In the inorganic substance powder-filled resin composition according to the present invention, the amount of other additives to be added is not particularly limited as long as the desired physical properties and processability are not impaired. For example, each of the other additives is desirably blended in a proportion of about 0% by mass to about 10% by mass and particularly desirably in a proportion of about 0.04% by mass to about 5% by mass and the total of other additives is blended in a proportion of 10% by mass or less in the case where the mass of the entire inorganic substance powder-filled resin composition is determined to be 100%.

Hereinafter, among these other additives, the additives considered to be important will be described. However, the other additives are not limited thereto.

Examples of the plasticizers include triethyl citrate, acetyltriethyl citrate, dibutyl phthalate, diaryl phthalate, dimethyl phthalate, diethyl phthalate, di-2-methoxyethyl phthalate, dibutyl tartrate, o-benzoyl benzoate, diacetin, and epoxidized soybean oil. These plasticizers are usually blended at a proportion of several percent by mass relative to the thermoplastic resin. The amount, however, is not limited to the range and epoxidized soybean oil or the like may be blended at a proportion of about 20 parts by mass to about 50 parts by mass, depending on the purpose of the molded product. In the inorganic substance powder-filled resin compositions according to the present invention, however, the blended amount thereof is preferably about 0.5 parts by mass to about 10 parts by mass and particularly preferably about 1 part by mass to about 5 parts by mass relative to 100 parts by mass of the thermoplastic resin.

As the colorants, any of known organic pigments, inorganic pigments, and dyes can be used. Specific examples include organic pigments such as azo, anthraquinone, phthalocyanine, quinacridone, isoindolinone, dioxazine, perinone, quinophthalone, and perylene pigments, and inorganic pigments such as ultramarine blue, titanium oxide, titanium yellow, iron oxide (red iron oxide), chromium oxide, zinc white, and carbon black.

Examples of the lubricants include fatty acid-based lubricants such as stearic acid, hydroxystearic acid, complex-type stearic acid, and oleic acid, aliphatic alcohol-based lubricants, aliphatic amide-based lubricants such as stearamide, oxystearamide, oleylamide, erucylamide, ricinolamide, behenamide, methylolamide, methylenebisstearamide, methylenebisstearobehenamide, bisamide acids of higher fatty acids, and complex-type amides, aliphatic ester-based lubricants such as n-butyl stearate, methyl hydroxystearate, polyvalent alcohol fatty acid esters, saturated fatty acid esters, and ester-based waxes, and fatty acid metal soap-based lubricants such as zinc stearate.

As the antioxidants, phosphorus-based antioxidants, phenol-based antioxidants, and pentaerythritol-based antioxidants can be used. More specifically, phosphorus-based antioxidant stabilizers such as phosphorous acid esters and phosphoric acid esters are preferably used. Examples of the phosphorous acid esters include triesters, diesters, and monoesters of phosphorous acid such as triphenyl phosphite, tris(nonylphenyl) phosphite, and tris(2,4-di-t-butylphenyl) phosphite.

Examples of the phosphoric acid ester include trimethyl phosphate, triethyl phosphate, tributyl phosphate, trioctyl phosphate, triphenyl phosphate, tricresyl phosphate, tris(nonylphenyl) phosphate, and 2-ethylphenyl diphenyl phosphate. These phosphorus-based antioxidants may be used singly or in combination of two or more of the phosphorus-based antioxidants.

Examples of the phenol-based antioxidants include α-tocopherol, butylhydroxytoluene, sinapyl alcohol, vitamin E, n-octadecyl-3-(3,5-di-t-butyl-4-hydroxyphenyl) propionate, 2-t-butyl-6-(3'-t-butyl-5'-methyl-2'-hydroxybenzyl)-4-methylphenyl acrylate, 2,6-di-t-butyl-4-(N,N-dimethylaminomethyl)phenol, 3,5-di-t-butyl-4-hydroxybenzylphosphonate diethyl ester, and tetrakis[3-(3,5-di-t-butyl-4-hydroxyphenyl)propionyloxymethyl]methane. These phenol-based antioxidants can be used singly or in combination of two or more of the phenol-based antioxidants.

The flame retardants are not particularly limited. For example, halogen-based flame retardants, phosphorus-based flame retardants, and non-phosphorus-halogen-based flame retardants such as metal hydrates can be used. Specific examples of the halogen-based flame retardants include halogenated bisphenylalkanes, halogenated bisphenol-based compounds such as halogenated bisphenylethers, halogenated bisphenylthioethers, and halogenated bisphenylsulfones, and bisphenol-bis(alkyl ether)-based compounds such as brominated bisphenol A, brominated bisphenol S, chlorinated bisphenol A, and chlorinated bisphenol S. Examples of the phosphorus-based flame retardants include tris(diethylphosphinic acid) aluminum, bisphenol A bis(diphenyl phosphate), triaryl isopropyl phosphate compounds, cresyl di-2,6-xylenyl phosphate, and condensed aromatic phosphoric acid esters. Examples of the metal hydrates include aluminum trihydroxide, magnesium dihydroxide, and a combination thereof. These flame retardants can be used singly or in combination of two or more of the flame retardants. These compounds act as flame retardant aids and can improve the flame retardant effect more effectively. Furthermore, antimony oxides such as antimony trioxide and antimony pentoxide, zinc oxide, iron oxide, aluminum oxide, molybdenum oxide, titanium oxide, calcium oxide, and magnesium oxide can be used together as flame retardant aids.

The foaming agents are compounds that cause phase change from solid to gas or liquid to gas by mixing with or injecting with pressure into the inorganic substance powder-filled resin composition serving as the raw material in a melted state in a melting and kneading apparatus or gas itself, and are mainly used for controlling an expansion ratio (foaming density) of a foamed sheet. A foaming agent that is liquid at room temperature causes phase change into gas due to the resin temperature and the resultant gas is dissolved in the melted resin, and a foaming agent that is gas at room temperature is dissolved in the melted resin as it is without causing phase change. The foaming agent dispersed and dissolved in the melted resin expands inside the sheet because the pressure is released at the time of extruding the melted resin from the extrusion die into a sheet-like product to provide a foamed sheet by forming many fine closed cells inside the sheet. The foaming agent acts as a plasticizer that secondary lowers the melt viscosity of the raw material resin composition and lowers the temperature for achieving a plasticized state of the raw material resin composition.

Examples of the foaming agent include aliphatic hydrocarbons such as propane, butane, pentane, hexane, and heptane; alicyclic hydrocarbons such as cyclobutane, cyclopentane, and cyclohexane; halogenated hydrocarbons such as chlorodifluoromethane, difluoromethane, trifluoromethane, trichlorofluoromethane, dichloromethane, dichlorofluoromethane, dichlorodifluoromethane, chloromethane, chloroethane, dichlorotrifluoroethane, dichloropentafluoroethane, tetrafluoroethane, difluoroethane, pentafluoroethane, trifluoroethane, dichlorotetrafluoroethane, trichlorotrifluoroethane, tetrachlorodifluoroethane, and perfluorocyclobutane; inorganic gases such as carbon dioxide, nitrogen, and air; and water.

As the foaming agent, for example, a foaming agent including the active component of the foaming agent in a carrier resin may be preferably used. Examples of the carrier resin include crystalline olefin resins. Of these olefin resins, crystalline polypropylene resin is preferable. Examples of the active components include hydrogen carbonate salts. Of these active components, hydrogen carbonate salts are preferable. A foaming agent concentrate in which the crystalline polypropylene resin is included as a carrier resin and the hydrogen carbonate salt is included as a thermal decomposition-type foaming agent is preferable.

The content of the foaming agent included in the foaming agent in the molding step can be appropriately determined depending on the amount and the like of the propylene homopolymer, the propylene block copolymer, and the inorganic substance powder, and is preferably in the range of 0.04% by mass to 5.00% by mass relative to the total mass of the inorganic substance powder-filled resin composition.

Various customary flowability adjusters can also be used. Examples include, but are not limited to, peroxides such as dialkyl peroxides including 1,4-bis[(t-butylperoxy)isopropyl]benzene. Depending on the kind of the used thermoplastic resin, these peroxides also act as cross-linking agents. Particularly, in the case where the propylene block copolymer has a constituent unit derived from diene, a part of the copolymer is cross-linked by the action of the peroxide, which may be contributory to controlling the physical properties and processability of the resin composition. Although the added amount of the peroxide is not particularly limited, the amount is preferably in the range of about 0.04% by mass to about 2.00% by mass and particularly preferably about 0.05% by mass to about 0.50% by mass relative to the total mass of the inorganic substance powder-filled resin composition.

### <<Method for producing inorganic substance powder-filled resin compositions

As the method for producing the inorganic substance powder-filled resin composition according to the present invention, common methods may be used and appropriately selected depending on molding methods (extrusion molding, injection molding, vacuum molding, or other moldings). For example, the propylene homopolymer, the propylene block copolymer, and the maleic anhydride-modified polypropylene as the optional component may be kneaded and melted with the inorganic substance powder before being fed into a molding machine from a hopper or the propylene homopolymer, the propylene block copolymer, the maleic anhydride-modified polypropylene as the optional component, and the inorganic substance powder may be kneaded and melted simultaneously with molding using an integrated molding machine. In the melting and kneading, each of the components is preferably uniformly dispersed and, at the same time, the mixture is kneaded by applying high shear stress. Various kinds of mixing apparatus such as general extruders, kneaders, and Banbury mixers may be used. For example, these components are preferably kneaded with a twin-screw kneader.

In the method for producing according to the present invention, the kneading order of the propylene homopolymer, the propylene block copolymer, the maleic anhydride-modified polypropylene as the optional component, and the inorganic substance powder is not particularly limited. For example, these three components or four components can be kneaded simultaneously or once the propylene homopolymer and the propylene block copolymer are kneaded together and then the thermoplastic resin mixture can be kneaded with the inorganic substance powder and the like. Each of the propylene homopolymer and the propylene block copolymer may be kneaded with the inorganic substance powder and the like to align the melt viscosities of the two thermoplastic resins, and thereafter both of the mixtures may be kneaded. The propylene homopolymer, the inorganic substance powder, and further the maleic anhydride-modified polypropylene may be kneaded once, and thereafter the propylene block copolymer may be kneaded. The propylene block copolymer generally tends to have ductility and low melt viscosity and thus the method of kneading at the end as described in the latter method is advantageous for more uniform dispersion of each component in the inorganic substance powder-filled resin composition. In this method, recovered products from the market and waste materials in factories may also be utilized for effective use. Compositions made by highly filling inorganic substance powders in thermoplastic resins have been already in practical use as described above and have been used in the general market. Particularly, in production factories, the waste materials of those compositions may be stored for each lot in a state where the compositions are managed. Kneading a specified amount of the propylene block copolymer, and if necessary, the maleic anhydride-modified polypropylene into these recovered products or waste materials allows the inorganic substance powder-filled resin composition according to the present invention also to be produced.

In the method for producing the inorganic substance powder-filled resin composition according to the present invention, the inorganic substance powder-filled resin composition may be in the form of pellets or may not be in the form of pellets. In the case of the form of pellets, the shape of the pellets is not particularly limited. For example, pellets having a cylindrical shape, a spherical shape, an ellipsoidal spherical shape, or other shapes may be molded.

The size of the pellets may be appropriately determined depending on the shape. For example, in the case of the spherical pellets, the diameter may be 1 mm to 10 mm. In the case of the ellipsoidal spherical pellets, the pellets may have an elliptical shape with an aspect ratio of 0.1 to 1.0 and may have longitudinal and lateral lengths of 1 mm to 10 mm. In the case of cylindrical pellets, the diameter may be within the range of 1 mm to 10 mm and the length may be within the range of 1 mm to 10 mm. These shapes may be molded to the pellets after the kneading process described later. The shape of the pellets may be molded according to conventional methods.

### <<Molded product>>

The molded product according to the present invention is a molded product made of the inorganic substance powder-filled resin composition described above.

The shape and the like of the molded product according to the present invention are not particularly limited and the molded product may have various forms. For example, various molded products such as sheets, particularly substitutes for paper and synthetic paper, daily necessities including brushes and shoehorns, housings for remote controllers and telephones, and food containers and other container bodies may be molded. The molded product according to the present invention has excellent ductility and thus is suitable for housings, sheets, and daily necessities to which force is applied during assembly and use.

The thickness of the molded product according to the present invention is not particularly limited and may vary from a thin thickness to a thick thickness depending on the form of the molded product. For example, the molded product having a thickness of 40 µm to 40 mm and more preferably having a thickness of 50 µm to 30 mm is exemplified. The thickness within this range allows a molded product that has no problem of moldability and processability, does not cause thickness deviation, is uniform, and has no defect to be molded.

In the case where the form of the molded product is a sheet, the thickness is desirably more preferably 50 um to 1,000 um and further preferably 50 µm to 400 µm. The sheet having the wall thickness within such a range can be suitably used as a substitute for paper or synthetic paper for general printing and information and packaging applications.

### <<Method for producing molded product>>

The method of producing the molded product according to the present invention is not particularly limited as long as the product can be molded into the desired shape. The molded product can be molded and processed by any of the known methods such as extrusion molding, injection molding, vacuum molding, blow molding, and calender molding. Injection molding is particularly preferable. In the case where the inorganic substance powder-filled resin composition according to the present invention includes the foaming agent and a molded product in an aspect of a foamed product is obtained, any conventionally known methods including liquid phase foaming such as injection foaming, extrusion foaming, and blow foaming, or solid phase foaming such as bead foaming, batch foaming, press foaming, and atmospheric secondary foaming may be employed as the method for molding the foamed product as long as the foamed molded product can be molded into a desired shape. In one aspect of the thermoplastic compositions including the crystalline polypropylene as the carrier resin and the hydrogen carbonate salt as the thermal decomposition-type foaming agent, the injection foaming method and the extrusion foaming method can desirably be used.

### <<Method for producing injection-molded product>>

The inorganic substance powder-filled resin composition according to the present invention has excellent moldability as described above and can be molded into various shapes of products by injection molding. The present invention also includes the molded products, in particular the injection-molded product, of the inorganic substance powder-filled resin compositions described above. Such molded product according to the present invention has the advantages of no appearance defects such as tiger stripes and excellent mechanical properties including ductility. Such effects are also exhibited when a part of the raw materials of the inorganic substance powder-filled resin composition is products recovered from markets and factories, and thus the molded product according to the present invention exhibits excellent properties even when the molded product according to the present invention is a recycled product. The inorganic substance powder-filled resin composition according to the present invention also has excellent ductility and is difficult to generate a break and a chip even when force is applied and thus is suitable for molding processing including the step of molding a plurality of parts provided with protrusions and recesses for meshing and thereafter fitting those parts together. For example, the handle and other parts (body part) of a brush or safety razor blade or parts of a housing such as a remote controller or a telephone can be separately injection-molded, and thereafter external force is applied to fit both parts together to prepare desired products.

The molding temperature for the injection molding, the extrusion molding, and the like varies to some extent depending on the molding method, the kind of the used thermoplastic resin, and the like, and cannot be generally specified. For example, a molding temperature of 180°C to 260°C and more preferably 190°C to 230°C allows the inorganic substance powder-filled resin composition according to the present invention to be molded into a predetermined shape with excellent drawdown properties and spreadability and without any localized denaturation of the composition.

### <Method for producing sheet>

In an aspect in which the molded product according to the present invention is a sheet, the method for producing the sheet is not particularly limited as long as the sheet-like product is molded by the method and the conventional known molding methods as described above can be used. In particular, considering the smoothness of the sheet surface, a method for molding the sheet by extrusion molding using an extruder is preferably employed.

The molding may be performed using a direct method in which a kneading process and a sheet-like product forming process are performed continuously, for example, using a T-die-type twin screw extrusion molding machine.

In the case of molding the sheet-like product, the product can be stretched in the uniaxial direction, the biaxial direction, or the multiaxial direction (stretching by, for example, a tubular method) at the time of or after the molding. In the case of the biaxial stretching, the stretching may be either sequential biaxial stretching or simultaneous biaxial stretching.

Stretching (for example, longitudinal and/or transverse stretching) of the sheet after molding allows micro voids in the sheet to be formed. This micro void formation in the sheet results in excellent whiteness of the sheet.

### Examples

Hereinafter, the present invention will be described more specifically with reference to Examples. These Examples are described only for the purpose of exemplifying specific aspects and embodiments in order to facilitate the understanding of the concept and scope of the present invention disclosed in the present description and described in the appended claims. The present invention, however, is not limited to these Examples.

### [Example 1 and Comparative Examples 1 to 3]

Various inorganic substance powder-filled resin compositions were prepared using the following raw materials, molded into test specimens, and subjected to physical property tests.
- Homopolymer: Propylene homopolymer (MFR: 0.5 g/10 min) manufactured by Japan Polypropylene Corporation
- Copolymer: Propylene block copolymer (J709QG, melting point: 160°C to 165°C) manufactured by Prime Polymer Co., Ltd.
- Calcium carbonate: Heavy calcium carbonate (with surface treatment applied, average particle diameter as measured by the air permeation method in accordance with JIS M-8511 2.20 µm) manufactured by BIHOKU FUNKA KOGYO CO., LTD.
- Elastomer: Hydrogenated styrene-based thermoplastic elastomer (TUFTEC (registered trademark) H1221) manufactured by Asahi Kasei Corporation
- Modified PP-1: Maleic anhydride-modified polypropylene (Umex (registered trademark) 1010) manufactured by Sanyo Chemical Industries, Ltd.

Forty parts by mass of the propylene homopolymer and 60 parts by mass of the heavy calcium carbonate powder described above were fed into an HK-25D (diameter 25 mm, L/D=41) co-rotating twin-screw kneading and extruding machine manufactured by Parker Corporation. First pellets were prepared by strand-extrusion at a cylinder temperature of 190°C to 200°C, thereafter cooling, and cutting. Subsequently, 90 parts by mass of these pellets and 10 parts by mass of the propylene block copolymer described above were extruded using the twin-screw kneading and extruding machine described above under the same conditions to prepare second pellets. These second pellets were fed into an injection molding machine to form dumbbell-shaped test specimens and the like (Example 1).

Under the same conditions described above, the resin composition not including the propylene block copolymer (Comparative Example 1), resin composition including the hydrogenated styrene-based thermoplastic elastomer instead of the propylene block copolymer (Comparative Example 2), and resin composition including the maleic anhydride-modified polypropylene (Comparative Example 3) were prepared and the prepared resin compositions were molded into test specimens. The compositions of each resin composition are listed in Table 1 below.

With respect to each of the test specimens prepared as described above, tensile properties, Charpy impact strength, and flexibility were evaluated in accordance with the following test methods. The results are listed in Table 1 below.

### (Tensile properties)

Tensile modulus and elongation at break were measured in accordance with JIS K7161-2:2014 under conditions of 23°C and 50% RH using Autograph AG-100kNXplus (manufactured by Shimadzu Corporation). The stretching speed was 10 mm/minute.

### (Charpy impact strength)

With respect to test specimen having a size of 80 mm × 10 mm, Charpy impact strength was measured in accordance with ISO 179/1eA. Evaluation for a part of the samples was not performed.

### (Flexibility test)

The test specimens described above were hand-folded as illustrated in Fig. 1 and flexibility was evaluated in accordance with the following criteria.
⊚: The test specimen was folded 10 times up to around 160° but did not break.
∘: The test specimen did not break unless the test specimen was folded two or three times up to around 160°.
Δ: The test specimen broke when the test specimen was folded only once to about 120° or more.
x: The test specimen broke when the test specimen was folded only once to about 90° to about 120°.

### [Table 1]

**[Table 1 Composition and evaluation result of each sample]**

| Example | | Comparativ e Example 1 | Exampl e 1 | Comparativ e Example 2 | Comparativ e Example 3 |
|---|---|---|---|---|---|
| Compositio n* | Homopolyme r | 40 | 36 | 36 | 39 |
| | Copolymer^{#} | - | 10 (27.8) | - | - |
| | Elastomer^{#} | - | - | 10 (27.8) | - |
| | Modified PP-1^{#} | - | | - | 1 (2.5) |
| | Calcium carbonate | 60 | 54 | 54 | 60 |
| Evaluation result | Modulus¹⁾ | 960 | 2,700 | 1,500 | 3,800 |
| | Elongation at break²⁾ | 6 | 68 | 72 | 2 |
| | Impact strength³⁾ | 1.6 | 2.4 | - | 1.5 |
| | Flexibilit y | × | ⊚ | ⊚ | Δ |

| | | | | | |
|---|---|---|---|---|---|
| * Unit: Part by mass, # Value in parentheses: Mass ratio (%) relative to homopolymer 1) Unit: MPa, 2) Unit: % 3) Charpy impact strength, unit: KJ/m² | | | | | |

The inorganic substance powder-filled resin composition of Example 1, which included specified amounts of the propylene homopolymer and propylene block copolymer as the thermoplastic resins, prepared according to the present invention exhibited higher values for the modulus, the elongation at break, and the Charpy impact strength than those of the resin composition of Comparative Example 1, which did not include the propylene block copolymer, and thus the mechanical properties were improved. Flexibility was also extremely excellent. On the other hand, with respect to the resin composition of Comparative Example 2, including the styrene-based elastomer allowed the elongation at break and flexibility to be significantly improved. The value of the modulus, however, was about a half of the value in Example 1. In the resin composition of Comparative Example 3, addition of the maleic anhydride-modified polypropylene increased the modulus, but the values of the elongation at break and Charpy impact strength were rather low compared to the resin composition of Comparative Example 1. Flexibility was only slightly improved. It was found that both mechanical strength and ductility were improved in a well-balanced manner for the first time by including the propylene block copolymer according to the present invention.

### [Examples 2 and 3]

The compositions of the inorganic substance powder-filled resin compositions varied to perform the same operations as the operations in Example 1. The samples of each of the compositions were prepared and the properties were evaluated. The appearance of the test specimens was observed to evaluate the moldability based on the presence or absence of tiger stripes (stripe-like flow marks). The composition and evaluation results of each of the samples are listed in Table 2, together with the results of Example 1 and the like.

### [Table 2]

**[Table 2 Composition and evaluation result of each sample]**

| Example | | Example 1 | Example 2 | Example 3 | Comparative Example 3 |
|---|---|---|---|---|---|
| Composition* | Homopolymer | 36 | 36 | 38 | 39 |
| | Copolymer^{#} | 10 (27.8) | 9 (25.0) | 4 (10.5) | - |
| | Modified PP-1 | - | 1 | 1 | 1 |
| | Calcium carbonate | 54 | 54 | 57 | 60 |
| Evaluation result | Modulus¹⁾ | 2,700 | 3,700 | 4,300 | 3,800 |
| | Elongation at break²⁾ | 68 | 54 | 48 | 2 |
| | Impact strength³⁾ | 2.4 | 2.2 | 2.0 | 1.5 |
| | Flexibility | ⊚ | ⊚ | ○ | Δ |
| | Tiger strips | Slightly present | Absent | Absent | Present |

| | | | | | |
|---|---|---|---|---|---|
| * Unit: Part by mass, # Value in parentheses: Mass ratio (%) relative to homopolymer 1) Unit: MPa, 2) Unit: % 3) Charpy impact strength, unit: KJ/m² | | | | | |

From the inorganic substance powder-filled resin compositions of Examples 2 and 3, which included the maleic anhydride-modified polypropylene together with the propylene homopolymer and the propylene block copolymer as the thermoplastic resin components, the molded products not only having excellent mechanical properties and excellent flexibility but also having excellent appearance without the tiger stripes were obtained. In particular, the inorganic substance powder-filled resin composition of Example 2 having a content of the propylene block copolymer of 9% by mass had both of the sufficient elongation at break and the flexibility evaluation results as well as the large values of the modulus and the Charpy impact strength. Fig. 1 is a photograph of the test specimen in Example 2 when the test specimen was folded about 160°. The inorganic substance powder-filled resin composition according to the present invention did not break even when such folding was repeated and exhibited excellent flexibility. In the test specimen in Comparative Example 3, which include the maleic anhydride-modified polypropylene, the tiger stripes were also observed. Consequently, it was exhibited that not only the maleic anhydride-modified polypropylene but also the propylene block copolymer was required to be included in order to improve moldability and reduce appearance defects.

### [Examples 4 to 8]

Test specimens were prepared by the same method as the method in Example 2 with the type of maleic anhydride-modified polypropylene being varied, and the moldability was evaluated based on the presence or absence of the tiger stripes (strip-like flow marks). The types of maleic anhydride-modified polypropylenes used and the results of the appearance evaluation of each sample are listed in Table 3.

### [Table 3]

**[Table 3 Types of maleic anhydride-modified polypropylene and evaluation results]**

| Example | Maleic anhydride-modified polypropylene | | | Tiger strips |
|---|---|---|---|---|
| | Type (*) | Maleic anhydride modification ratio | | |
| | | (% by mol) | (% by mass) | |
| Example 4 | Modified PP-2 | 1.0 | 2.4 | Present |
| Example 5 | Modified PP-3 | 1.1 | 2.6 | Present |
| Example 6 | Modified PP-4 | 1.7 | 3.9 | Almost absent |
| Example 2 | Modified PP-1 | 2.0 | 4.7 | Absent |
| Example 7 | Modified PP-5 | 2.0 | 4.7 | Almost absent |
| Example 8 | Modified PP-6 | 2.1 | 5.0 | Present; physical properties are lowered^{#} |

| | | | | |
|---|---|---|---|---|
| * Modified PP-2: Umex 1001, manufactured by Sanyo Chemical Industries, Ltd. Modified PP-3: SCONA TPPP 9012, manufactured by BYK-Chemie GmbH Modified PP-4: SCONA TPPP 9212, manufactured by BYK-Chemie GmbH Modified PP-5: Kayabrid 002PP, manufactured by KAYAKU NOURYON CORPORATION Modified PP-6: SCONA TPPP 10213, manufactured by BYK-Chemie GmbH # Flexibility and value of elongation at break was lowered as compared to Example 2. | | | | |

It was found that the maleic anhydride-modified polypropylene having a maleic acid modification ratio of 3.0% by mass or more and 4.9% by mass or less allowed little to no tiger stripes to be observed and the moldability of the inorganic substance powder-filled resin composition to be improved. It was also clear that the maleic anhydride-modified polypropylene having a modification ratio (graft amount) of 5.0% by mass or more did not provide improvement in moldability, which was possibly associated with deterioration in the physical properties of the inorganic substance powder-filled resin composition.

From the above, it was found that even in the resin composition highly filled with the inorganic substance powder, the thermoplastic resin components including the propylene homopolymer and the propylene block copolymer and the composition in which the content of the propylene block copolymer was 10 parts by mass or more and 30 parts by mass or less relative to 100 parts by mass of the propylene homopolymer allowed the resin composition to exhibit ductility and excellent mechanical properties; and the resin composition further including the maleic anhydride-modified polypropylene, particularly maleic anhydride-modified polypropylene having a modification ratio of 3.0% by mass to 4.9% by mass allowed the molded product having excellent surface appearance to be obtained.

## Claims

1. An inorganic substance powder-filled resin composition comprising:
a thermoplastic resin and inorganic substance powder in a proportion of 50:50 to 10:90 in a mass ratio, wherein
the thermoplastic resin comprises a propylene homopolymer and a propylene block copolymer, and
a content of the propylene block copolymer is 10 parts by mass or more and 30 parts by mass or less relative to 100 parts by mass of the propylene homopolymer.

2. The inorganic substance powder-filled resin composition according to claim 1, wherein the thermoplastic resin further comprises maleic anhydride-modified polypropylene in an amount of 0.5 parts by mass or more and 3.0 parts by mass or less relative to 100 parts by mass of a total mass of the inorganic substance powder-filled resin composition.

3. The inorganic substance powder-filled resin composition according to claim 1 or 2, wherein the maleic anhydride-modified polypropylene has a mass average molecular weight of 25,000 or more and 35,000 or less, and a graft amount of 3.0% by mass or more and 4.9% by mass or less.

4. The inorganic substance powder-filled resin composition according to any one of claims 1 to 3, wherein the inorganic substance powder is heavy calcium carbonate.

5. The inorganic substance powder-filled resin composition according to claim 4, wherein the heavy calcium carbonate is heavy calcium carbonate particles having an average particle diameter measured by an air permeation method in accordance with JIS M-8511 of 0.7 um or more and 6.0 µm or less.

6. A molded product comprising the inorganic substance powder-filled resin composition according to any one of claims 1 to 5.

7. The molded product according to claim 6, wherein the molded product is an injection-molded product.
